# EUROPÄISCHE PATENTSCHRIFT

(11) **EP 1 156 963 B1**
(45) Veröffentlichungstag und Bekanntmachung des Hinweises auf die Patenterteilung: **28.05.2003**
(21) Anmeldenummer: 00914109.4
(22) Anmeldetag: 04.03.2000
(51) Int. Cl.: B64C 27/14, B64C 27/605

(54) **HUBSCHRAUBER**
HELICOPTER
HELICOPTERE

(30) Priorität: 10.03.1999 DE 19910449
(43) Veröffentlichungstag der Anmeldung: 28.11.2001
(73) Patentinhaber: ZF Luftfahrttechnik GmbH, 34379 Calden (DE)
(72) Erfinder: SCHREIBER, Thomas, 81735 München (DE); WINTJEN, Carsten, D-34393 Grebenstein (DE); RÖHN, Torsten, D-34587 Felsberg (DE)
(74) Vertreter: Zietlow, Karl-Peter
(86) Internationale Anmeldenummer: EP0001922
(87) Internationale Veröffentlichungsnummer: WO00053491

(56) Entgegenhaltungen:
- CH-A- 443 007
- DE-A- 19 627 869
- FR-A- 1 163 970
- US-A- 4 375 940
- US-A- 4 805 850
- US-A- 5 826 822

## Beschreibung

Die Erfindung betrifft einen Hubschrauber mit den Merkmalen nach dem Oberbegriff des Anspruchs 1.

Das Kernstück eines Hubschraubers ist sein Hauptrotor. Ein oder mehrere Triebwerke treiben den Hauptrotor über ein Getriebe und einen Rotormast an, der im Gehäuse des Getriebes drehbar gelagert und an dem der Rotorkopf befestigt ist.

Der Hauptrotor sorgt mit seinen zwei und mehr Rotorblättern, die mit einem Rotorkopf um ihre Längsachse einstellbar verbunden sind, nicht nur für den Auftrieb, sondern auch für den Vortrieb. Zum Anlenken der Rotorblätter an den Rotorkopf dienen Schlaggelenke, Schwenkgelenke, Elastomerlager oder torsionsweiche Stäbe. Um einen Auftrieb zu erzeugen, werden die Rotorblätter kollektiv, d. h. synchron um einen Winkel zur Rotationsebene angestellt. Einen Vortrieb erzielt man durch eine zyklische Ansteuerung, d. h. der Einstellwinkel eines Rotorblatts durchläuft während einer Umdrehung des Rotormastes ein Maximum und ein Minimum. Die Lage der Extremwerte bestimmt die Flugrichtung.

Der Hubschrauberpilot steuert die Rotorblätter über eine Taumelscheibe oder Spinne an. Eine Taumelscheibe besteht aus einem stationären Teil, der über eine sogenannte Schere drehfest, aber axial verschiebbar sowie zum Rotormast in alle Richtungen kippbar am Gehäuse eines Getriebes befestigt ist, und aus einem drehbaren Teil; der über Radial- und Axiallager gegenüber dem stationären Teil drehbar gelagert ist. Der drehbare Teil bewegt sich mit dem stationären Teil in axialer Richtung und macht ebenfalls die Kippbewegungen mit. Er ist über eine weitere Schere am Rotorkopf befestigt.

Die Bewegung der Taumelscheibe wird über einen Hebelmechanismus auf Rotorblattaufnahmen am Rotorkopf übertragen, und zwar meistens in der Weise, daß sich der Einstellwinkel eines Rotorblatts mit der Annäherung der Taumelscheibe an den Rotorkopf vergrößert.

Der Hubschrauberpilot verstellt für die Flugmanöver die Taumelscheibe über einen weiteren Hebelmechanismus. Parallel zu diesem sind häufig hydraulische Servomotoren angeordnet, die zum einen die Ansteuerung erleichtern und zum anderen eine überlagerte Regelung ermöglichen, die auftretenden Rotorblattkräften entgegenwirkt.

Die nutzbare Höchstgeschwindigkeit von Hubschraubern wird durch rotorinduzierte Schwingungen sowie durch den Wirkungsgrad des vorwärts fliegenden Hauptrotors begrenzt. Schwingungen und Wirkungsgrad sind bedingt durch nicht optimale Einstellwinkel der Rotorblätter bezüglich der momentanen Richtung und Geschwindigkeit der Anströmung und des dynamischen Verhaltens. Um diesen Effekten entgegenzuwirken, ist es vorteilhaft, den Blatteinstellwinkel flexibler zu steuern. Flattern infolge abgerissener Strömung an den Rotorblättern kann z. B. durch Störunterdrückungsregler mit Hilfe von Bandfiltern für die erste Torsionseigenfrequenz der Rotorblätter kontrolliert werden. Dadurch werden Lärm und Vibrationen verringert und der Wirkungsgrad sowie die Wirtschaftlichkeit verbessert. Ferner sinkt die Arbeitsbelastung des Piloten.

Es sind grundsätzlich zwei aktive Steuerungssysteme bekannt (Papier-Nr. III.6.3.1, Sixteenth European Rotorcraft Forum, 18 bis 21. Sept. 1990, Glasgow "Entwicklung und erste Tests von Aktuatoren für eine Einzelblattsteuerung" Peter Richter, Hans-Dieter Eisbrecher, Valentin Klöppel), nämlich die höherharmonische Steuerung, die der Steuerung der Taumelscheibe überlagert ist und deren Stellglieder unterhalb der Taumelscheibe im hubschrauberfesten System angeordnet sind, und die Einzelblattsteuerung, bei der jedem Rotorblatt ein Stellglied im drehenden System zwischen dem drehbaren Teil der Taumelscheibe und den Rotorblattaufnahmen zugeordnet ist.

Bei der höherharmonischen Steuerung werden höherfrequente Blattwinkeländerungen durch Stellglieder im hubschrauberfesten System über die Taumelscheibe auf die Rotorblätter übertragen. Aus Geometriegründen können damit nur bestimmte Frequenzen übertragen werden, nämlich die sogenannten Blattzahlharmonischen und die unmittelbar benachbarten Frequenzen, bei einem Vierblattrotor also die vierte, dritte und fünfte, die achte, siebte und neunte usw. Harmonische der Rotordrehfrequenz, nicht aber die zweite, sechste oder zehnte Harmonische. Für Rotoren mit mehr als vier Blättern gilt entsprechendes.

Bei der Einzelblattsteuerung gibt es bezüglich der Frequenzen und Signalform keine Einschränkungen, jedoch ist der Bauaufwand für die Stellglieder im drehenden System wegen der zusätzlichen Fliehkraftbelastungen und der Energie- und Signalübertragung von dem hubschrauberfesten System auf das rotierende System erheblich größer. Ferner bringt die Fähigkeit, jedes Stellglied individuell anzusteuern, die Gefahr mit sich, daß sich die Rotorblätter im Falle einer Fehlfunktion des Regelungssystems willkürlich bewegen, was die Sicherheit beeinträchtigt.

Es sind aus der DE 196 27 869 A1 auch gemischte Systeme bekannt, bei denen eine Taumelscheibe mit einem oder mehreren einzelnen hydraulischen Stellgliedern zwischen der Taumelscheibe und den Rotorblättern zusammenarbeitet. Die Stellglieder liegen außerhalb des Rotormastes und des Rotorkopfs und sind Umwelteinflüssen ausgesetzt. Ferner belasten die Zentrifugalkräfte der Steuerglieder, die im Laststrang liegen, das Steuersystem. Es ist auch möglich, das zwei Taumelscheiben miteinander zusammenarbeiten. Aus diesem Dokument ist ein Hubschraubes gemäß dem oberbegriff des Anspruchs 1 bekannt.

Ferner ist es aus der US 3 080 002 bekannt, daß eine Taumelscheibe im geschlossenen Rotorkopf angeordnet ist und Stellsysteme durch den Rotormast bzw. eine darin koaxial angeordnete, mit einem Getriebegehäuse fest verbundene Tragsäule zur Taumelscheibe führen. Dadurch sind die Taumelscheibe und die Steuergestänge für die Rotorblätter durch den Rotormast und den Rotorkopf geschützt und beeinträchtigen außerdem die Luftströmung nicht. Zusätzliche hydraulische Stellglieder sind nicht vorgesehen.

Die DE 36 39 168 C2 zeigt eine ähnliche Lösung, bei der Steuerstangen durch einen ringförmigen Raum zwischen einer Tragsäule und dem Rotormast geführt sind.

Der Erfindung liegt die Aufgabe zugrunde, bei einem Hubschrauber der eingangs genannten Art mit einer individuellen Ansteuerung der Rotorblätter die Steuereinrichtungen geschützt und von Fremdeinflüssen wenig belastet unterzubringen.

Sie wird gemäß der Erfindung durch die Merkmale des Anspruchs 1 gelöst.

Nach der Erfindung sind die Steuergestänge und die Stellglieder im Rotormast und/oder Rotorkopf gelagert. Sie greifen jeweils für ein Rotorblatt an einem Mischhebel an, der über eine Steuerstange auf einen Schwenkhebel wirkt und so den Anstellwinkel des Rotorblatts einstellt. Die Stellglieder des Zusatzstellsystems sind strukturell an dem drehenden System angebunden oder gemäß einer Ausgestaltung in dieses integriert, so daß sie keinen Windlasten ausgesetzt sind und ihre Zentrifugalkräfte, Steuer-, Massen- und Zusatzlasten zum größten Teil unmittelbar vom Rotormast oder dem Rotorkopf aufgenommen werden können, die für sehr viel höhere Lasten ausgelegt sind. Durch die Ausnutzung der strukturellen Rahmenbedingungen kann das Gesamtgewicht verringert werden.

Die Aktuatorik der Stellglieder und Steuerstangen wird über die Mischhebel ohne Zusatzlasten eingekoppelt, wobei die einzelnen Steueranteile durch die Abstände der Anlenkachsen voneinander am Mischhebel variiert werden können. Zudem ist es zweckmäßig, daß die Steuerstange zwischen der Anlenkachse des Steuergestänges und der Anlenkachse des Stellgliedes an einer Anlenkachse am Mischhebel angreift. Dabei ist vorteilhaft der Abstand der Anlenkachse der Steuerstange zur Anlenkachse des Steuergestänges kleiner als der Abstand zur Anlenkachse des Stellglieds. Durch diese Maßnahmen können die Stellkraft und der Stellweg auf das gewählte Stellprinzip elektrisch oder hydraulisch abgestimmt und optimiert werden.

Nach einer Ausgestaltung der Erfindung ist die Steuerstange längenverstellbar, so daß die Nullposition des Anstellwinkels der Rotorblätter leicht einstellbar ist. Alternativ dazu ist es möglich, zwischen der Welle und dem Rotorblatt ein dreheinstellbares Element vorzusehen, um den Einstellwinkel justieren zu können. Außerdem ist es zweckmäßig, daß die Längsachsen der Stellglieder und der Steuerstangen parallel zur Rotationsachse des Rotormastes verlaufen, so daß sich die Zentrifugalkräfte nicht auf die Stellbewegung auswirken. Ferner können die am rotierenden System befestigten Stellglieder einfach durch Leitungen entlang der Wände des Rotormastes versorgt werden.

Da die Steuerelemente, Stellglieder und Steuerstangen und die Taumelscheibe innerhalb des Rotormastes bzw. des Rotorkopfes oder eines Getriebes angeordnet sind, können für sie die eventuell zur Verfügung stehenden Schmiermittel und Hydraulikfluide genutzt werden. Ferner sind sie in einem erosions- und korrosionsgeschützten Raum untergebracht.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

In der Zeichnung ist ein Ausführungsbeispiel der Erfindung dargestellt.

Es zeigen:
- Fig. 1: einen schematischen Teillängsschnitt durch einen Rotormast eines Hubschraubers und
- Fig. 2: eine Teilansicht von oben.

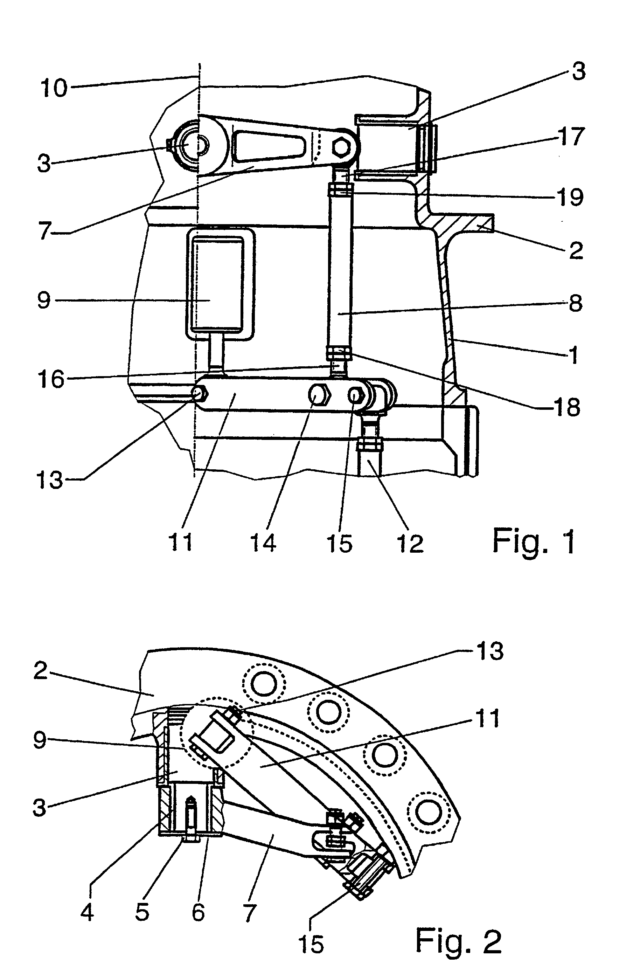

Ein Rotormast 1 ist in einem nicht näher dargestellten Getriebegehäuse um eine Rotationsachse 10 drehbar gelagert. Er wird über das Getriebe von einem oder zwei ebenfalls nicht dargestellten Triebwerken angetrieben. In dem Rotormast 1, der über einen Flansch 2 mit weiteren rotierenden Teilen verbunden werden kann, ist für jedes Rotorblatt zum Anstellen des Anstellwinkels ein Schwenkhebel 7, auch Blatthorn genannt, vorgesehen. Der Schwenkhebel 7 ist über eine Steckverzahnung 4 formschlüssig mit einer Welle 3 verbunden und wird axial mittels einer Schraube 5 und einer Scheibe 6 gehalten. Die Welle 3 ist im Rotormast 1 drehbar gelagert (Fig. 2).

An dem freien Ende des Schwenkhebels 7 ist eine Steuerstange 8 angelenkt, die über eine Anlenkachse 14 an einem Mischhebel 11 angreift. Die Steuerstange 8 verläuft im wesentlichen parallel zur Rotationsachse 10. Sie ist in ihrer Länge einstellbar. Hierzu dienen an ihren Enden Stellschrauben 16, 17, die durch Kontermuttern 18, 19 in ihrer Position fixiert werden.

Während die Anlenkachse 14 der Steuerstange 8 zwischen den Enden des Mischhebels 11 angeordnet ist, sind an den Enden des Mischhebels 11 eine Anlenkachse 13 für ein Stellglied 9 und eine Anlenkachse 15 für ein Steuergestänge 12 vorgesehen. Diese ist mit dem rotierenden Teil einer nicht näher dargestellten Taumelscheibe verbunden.

Das Stellglied 9 kann elektrisch oder hydraulisch betätigt sein. Der Einfluß des Stellglieds 9 auf die Steuerung wird durch das Verhältnis des Abstands seiner Anlenkachse 13 von der Anlenkachse 14 der Steuerstange 8 zum Abstand der Anlenkachse 15 des Steuergestänges 12 von der Anlenkachse 14 der Steuerstange 8 bestimmt. Die Stellglieder 9 sind in der Gehäusestruktur des Rotormastes 1 integriert, so daß ihre Zentrifugalkräfte, Steuer-, Massen- und Zusatzlasten unmittelbar von der Gehäusestruktur des Rotormastes 1 aufgenommen werden. Die in Richtung der Rotationsachse 10 auf den Mischhebel 11 wirkenden Stellkräfte werden durch die Zentrifugalkräfte praktisch nicht beeinflußt.

### Bezugszeichen

- 1: Rotormast
- 2: Flansch
- 3: Welle
- 4: Steckverzahnung
- 5: Schraube
- 6: Scheibe
- 7: Schwenkhebel (Blatthorn)
- 8: Steuerstange
- 9: Stellglied
- 10: Rotationsachse
- 11: Mischhebel
- 12: Steuergestänge
- 13: Anlenkachse (Stellglied)
- 14: Anlenkachse (Steuerstange)
- 15: Anlenkachse (Steuergestänge)
- 16: Stellschraube
- 17: Stellschraube
- 18: Kontermutter
- 19: Kontermutter

## Patentansprüche

1. Hubschrauber mit Rotorblättern, die an einem Rotorkopf angelenkt sind, der mit einem in einem Getriebegehäuse drehbar gelagerten Rotormast (1) drehfest verbunden ist und über ein Getriebe von einem oder mehreren Triebwerken angetrieben wird, wobei der Anstellwinkel der Rotorblätter zur Rotationsebene über eine Taumelscheibe und über einzelne, den Rotorblättern individuell zugeordnete Stellglieder (9) gesteuert wird, **dadurch gekennzeichnet, daß** die individuell zugeordneten Stellglieder (9) im Rotormast (1) und/oder Rotorkopf gelagert sind und jedem Rotorblatt ein Mischhebel (11) zugeordnet ist, an den einerseits das individuell zugeordnete Stellglied (9) und ein mit dem drehbaren Teil der Taumelscheibe verbundenes Steuergestänge (12), und andererseits eine Steuerstange (8) angelenkt ist, die auf einen Schwenkhebel wirkt, der den Anstellwinkel einstellt.

2. Hubschrauber nach Anspruch 1, **dadurch gekennzeichnet, daß** die Stellglieder (9) im Rotormast (1) und/oder Rotorkopf integriert sind.

3. Hubschrauber nach Anspruch 1 oder 2, **dadurch gekennzeichnet, daß** jedem Rotorblatt ein Stellglied (9) zugeordnet ist.

4. Hubschrauber nach einem der vorhergehenden Ansprüche, **dadurch gekennzeichnet, daß** die Steuerstange (8) längenverstellbar ist.

5. Hubschrauber nach einem der Ansprüche 1 bis 3, **dadurch gekennzeichnet, daß** der Schwenkhebel mit einer Welle (3) verbunden ist, die drehbar im Rotormast gelagert ist, und dass zwischen der Welle (3) und dem Rotorblatt ein dreheinstellbares Element vorgesehen ist.

6. Hubschrauber nach einem der vorhergehenden Ansprüche, **dadurch gekennzeichnet, daß** die Steuerstange (8) zwischen der Anlenkachse (15) des Steuergestänges (12) und der Anlenkachse (13) des Stellglieds (9) an einer Anlenkachse (14) am Mischhebel (11) angreift.

7. Hubschrauber nach einem der vorhergehenden Ansprüche, **dadurch gekennzeichnet, daß** am Mischhebel (11) die Anlenkachse (14) der Steuerstange (8) näher zur Anlenkachse (15) des Steuergestänges (12) liegt als zur Anlenkachse (13) des Stellglieds (9).

8. Hubschrauber nach einem der vorhergehenden Ansprüche, **dadurch gekennzeichnet, daß** die Stellglieder (9) parallel zur Rotationsachse (10) angeordnet sind.

## Claims

1. Helicopter having rotor blades, which are coupled to a rotor head, which is non-rotatably connected to a rotor pylon (1) mounted rotatably in a transmission housing and is driven via a transmission by one or more engines, wherein the pitch angle of the rotor blades relative to the plane of rotation is controlled by means of a swashplate and by means of individual actuators (9) individually associated with the rotor blades, **characterized in that** the individually associated actuators (9) are mounted in the rotor pylon (1) and/or rotor head and there is associated with each rotor blade a mixer lever (11), to which are coupled, on the one hand, the individually associated actuator (9) and a control linkage (12) connected to the rotatable part of the swashplate and, on the other hand, a control rod (8), which acts upon a swivelling lever, which sets the pitch angle.

2. Helicopter according to claim 1, **characterized in that** the actuators (9) are integrated in the rotor pylon (1) and/or rotor head.

3. Helicopter according to claim 1 or 2, **characterized in that** an actuator (9) is associated with each rotor blade.

4. Helicopter according to one of the preceding claims, **characterized in that** the control rod (8) is adjustable in length.

5. Helicopter according to one of claims 1 to 3, **characterized in that** the swivelling lever is connected to a shaft (3), which is mounted rotatably in the rotor pylon, and that a rotationally adjustable element is provided between the shaft (3) and the rotor blade.

6. Helicopter according to one of the preceding claims, **characterized in that** the control rod (8) acts between the link pin (15) of the control linkage (12) and the link pin (13) of the actuator (9) upon a link pin (14) on the mixer lever (11).

7. Helicopter according to one of the preceding claims, **characterized in that** on the mixer lever (11) the link pin (14) of the control rod (8) lies closer to the link pin (15) of the control linkage (12) than to the link pin (13) of the actuator (9).

8. Helicopter according to one of the preceding claims, **characterized in that** the actuators (9) are disposed parallel to the axis of rotation (10).

## Revendications

1. Hélicoptère comportant des pales de rotor qui sont articulées à une tête de rotor qui est elle-même reliée solidairement en rotation à un mât de rotor (1) monté rotatif dans un carter de transmission, et qui est entraînée par un ou plusieurs moteurs, par l'intermédiaire d'une transmission, l'angle d'incidence des pales du rotor par rapport au plan de rotation étant commandé par l'intermédiaire d'un plateau oscillant et par l'intermédiaire d'actionneurs distincts (9) associés individuellement aux pales du rotor, **caractérisé en ce que** les actionneurs (9) associés individuellement sont montés dans le mât de rotor (1) et/ou dans la tête de rotor et, à chaque pale du rotor, est associé un levier mélangeur (11) auquel sont articulés, d'une part, l'actionneur (9) associé individuellement et une biellette de commande (12) reliée à la partie tournante du plateau oscillant et, d'autre part, une biellette de commande (8) qui agit sur un levier oscillant qui règle l'angle d'incidence.

2. Hélicoptère selon la revendication 1, **caractérisé en ce que** les actionneurs (9) sont intégrés dans le mât de rotor (1) et/ou dans la tête de rotor.

3. Hélicoptère selon la revendication 1 ou 2, **caractérisé en ce qu'**un actionneur (9) est associé à chaque pale du rotor.

4. Hélicoptère selon l'une des revendications précédentes, **caractérisé en ce que** la biellette de commande (8) est réglable en longueur.

5. Hélicoptère selon l'une des revendications 1 à 3, **caractérisé en ce que** le levier oscillant est relié à un arbre (3) qui est monté rotatif dans le mât de rotor et **en ce qu'**un élément réglable en rotation est prévu entre l'arbre (3) et la pale de rotor.

6. Hélicoptère selon l'une des revendications précédentes, **caractérisé en ce que** la biellette de commande (8) attaque un axe d'articulation (14) prévu sur le levier mélangeur (11) entre l'axe d'articulation (15) de la tringle de commande (12) et l'axe d'articulation (13) de l'actionneur (9).

7. Hélicoptère selon l'une des revendications précédentes, **caractérisé en ce que**, sur le levier mélangeur (11), l'axe d'articulation (14) de la biellette de commande (8) est plus rapproché de l'axe d'articulation (15) de la tringle de commande (12) que de l'axe d'articulation (13) de l'actionneur (9).

8. Hélicoptère selon l'une des revendications précédentes, **caractérisé en ce que** les actionneurs (9) sont disposés parallèlement à l'axe de rotation (10).
